# EUROPEAN PATENT SPECIFICATION

(11) **EP 1 412 202 B1**
(45) Date of publication and mention of the grant of the patent: **16.03.2005**
(21) Application number: 02802291.1
(22) Date of filing: 09.10.2002
(51) Int. Cl.: B60B 1/04

(54) **BICYCLE WHEEL PARTICULARLY FOR RACING AND MOUNTAIN BICYCLE**
FAHRRAD-RAD, INSBESONDERE FÜR RENNRAD UND MOUNTAINBIKE
ROUE DE BICYCLETTE DESTINEE EN PARTICULIER A UNE BICYCLETTE DE COURSE ET A UNE BICYCLETTE DE MONTAGNE

(30) Priority: 02.11.2001 IT BO20010092 U
(43) Date of publication of application: 28.04.2004
(73) Proprietor: Vuelta International S.p.A., 40060 Osteria Grande (IT)
(72) Inventor: FIORAVANTI, Moreno, I-40064 Ozzano dell'Emilia (IT)
(74) Representative: Kirschner, Klaus Dieter, Dipl.-Phys.
(86) International application number: PCT/EP2002/011314
(87) International publication number: WO 2003/037650

(56) References cited:
- EP-A- 1 068 963
- WO-A-02/053395
- US-A- 3 770 295
- US-A- 3 894 777
- US-A1- 2002 074 853

## Description

### Technical Field

The present invention relates to a bicycle wheel particularly for racing and mountain bicycle.

### Background Art

Racing bicycles and bicycles for excursions on rough or mountainous terrain are currently provided with extremely lightweight wheels by using new materials and modem manufacturing technologies.

At the same time, such wheels must have great mechanical strength and a rigidity that is adapted for the characteristics of the road surface. Wheels that have a particularly rigid behavior when affected by the stresses encountered in use are those formed monolithically by pressure die-casting, which however often are too heavy and can be used only in particular conditions or situations.

A compromise between rigidity and low weight can be achieved with conventional wheels in which the rim is connected to the hub by way of a distribution of wire spokes having various shapes and dimensions. However, such wheels have drawbacks due to the fact that the wire spokes, by crossing each other, are in mutual contact in one or more points: this contact causes inward flexing of the wire spokes after assembly, with a consequent concentration of abnormal stresses and unacceptable instability in use.

### Disclosure of the Invention

The aim of the present invention is to obviate the drawbacks cited above by providing a wheel that has high characteristics of rigidity and stability in use combined with low weight and versatility in use.

Within this aim, an object of the present invention is to provide a wheel in which the wire spokes cross each other, connecting the rim to the hub, without mutual contact points.

Another object of the present invention is provide a structure that is simple, relatively easy to provide in practice, safe in use, effective in operation, and relatively low in cost.

This aim and these and other objects are achieved by the present bicycle wheel, particularly for racing and mountain bicycle, which comprises a hub that has two flanges connected to a rim by way of wire spokes, characterized in that said wire spokes form a first plurality of radial elements, which are mutually angularly equidistant by a preset angle and connect said rim to the first flange of said hub, and a second plurality of radial elements, which are mutually angularly equidistant by said angle, are offset by half of said angle with respect to said first plurality and connect said rim to the second flange of said hub, each one of said radial elements being constituted by a first wire spoke and a second wire spoke which are substantially parallel.

### Brief description of the Drawings

Further characteristics and advantages will become better apparent from the detailed description of a preferred but not exclusive embodiment of a bicycle wheel, particularly for racing and mountain bicycle, according to the invention, illustrated only by way of non-limitative example in the accompanying drawings, wherein:

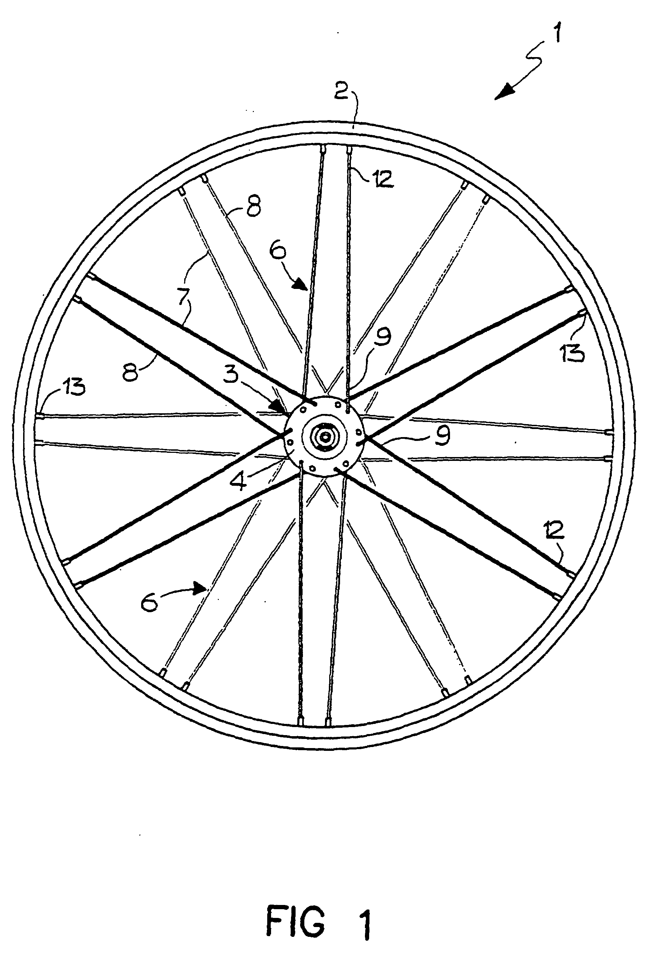

Figure 1 is a side elevation view of the wheel according to the invention;
Figure 2 is a side elevation view of a detail of the hub of the wheel;
Figure 3 is a detailed side elevation view of a sector of the wheel:
Figure 4 is a side elevation view of another embodiment of the wheel according to the invention;
Figure 5 is a side elevation view of a detail of the hub of the wheel of Figure 4;
Figure 6 is a diametrical sectional view of the wheel, taken along the line VI-VI of Figure 4.

### Ways of carrying out the Invention

In the examples of embodiment that follow, individual features, presented in relation to specific examples, may actually be interchanged with other different features that exist in other examples of embodiment.

With reference to the figures, the reference numeral 1 generally designates a bicycle wheel particularly for a racing and mountain bicycle according to the invention.

The wheel comprises a rim 2 and a central hub 3, which are mutually connected by a distribution of wire spokes: the hub 3 has a first flange 4 and a second flange 5 which are lateral, are substantially disk-like and have respective inner faces 4a, 5a and outer faces 4b, 5b.

According to the invention, the wire spokes form a first plurality of radial elements 6, which connect the first flange 4 to the rim 2 and are mutually angularly equidistant by a preset angle, and a second plurality of radial elements 6, which are mutually angularly equidistant by the same angle and connect the second flange 5 to the rim 2.

The first and second pluralities of radial elements 6 are mutually offset, preferably by half of such preset angle. In the specific case, by way of example, for each of the two pluralities there are six radial elements 6 that are mutually angularly spaced by 60°; accordingly, the first and second pluralities of radial elements are mutually offset by 30°.

Each one of the radial elements 6 that connect the two flanges 4 and 5 of the hub 3 to the rim 2 is constituted by a first wire spoke 7 and by a second wire spoke 8, which are substantially parallel or, in a fully equivalent manner, converge slightly in a centripetal direction.

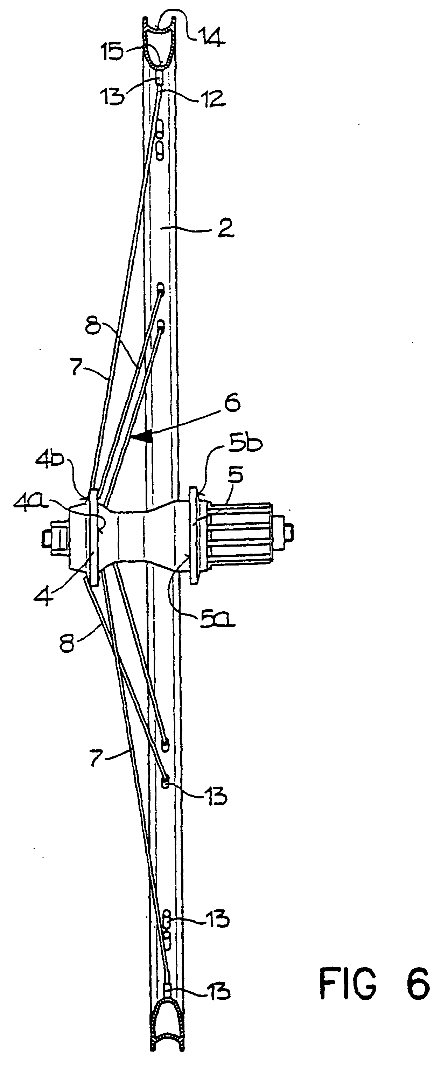

The wire spokes 7 and 8 are of the type in which the proximal end 9 is folded and engaged in a respective engagement hole 10 provided peripherally in the flange 3 and 4; the spoke also forms, at the proximal end 9, a larger portion 11 for retention in the hole 10. Preferably, for each one of the radial elements 6 of the wheel, the first wire spoke 7 is inserted in the respective hole 10 so that the larger portion 11 is engaged against the inner face 4a, 5a of the respective flange 4 and 5, while the larger portion 11 of the second wire spoke 8 is engaged against the outer face 4b, 5b (see Figure 6) of the same flange. The distal end 12 of each wire spoke 7 and 8 is instead threaded and screwed into a respective cylindrical nipple 13, which is rigidly coupled to the rim 2. The distal end 12 and the proximal end 9 of the wire spokes 7 and 8 have a circular cross-section, while the central portion preferably has a substantially flattened cross-section.

The nipples 13 are distributed along the rim 2 in pairs that are mutually angularly equidistant, for fixing respectively the first and second wire spokes 7 and 8 of each radial element 6. The nipples 13 of each pair are adjacent and are arranged at a regular circumferential distance.

The rim 2 is internally hollow and has a peripheral groove 14 for accommodating the tire and a plurality of radial openings 15 for accommodating the respective nipples 13.

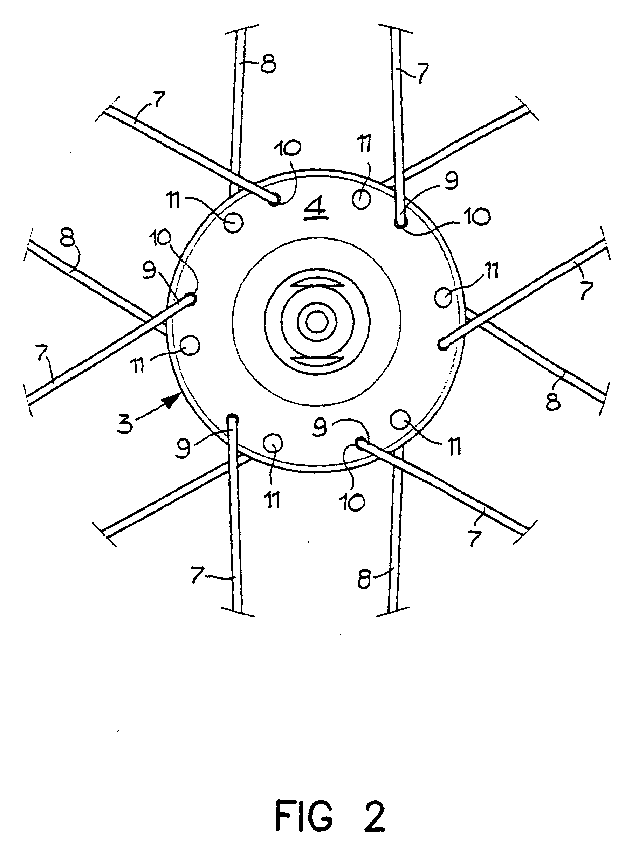

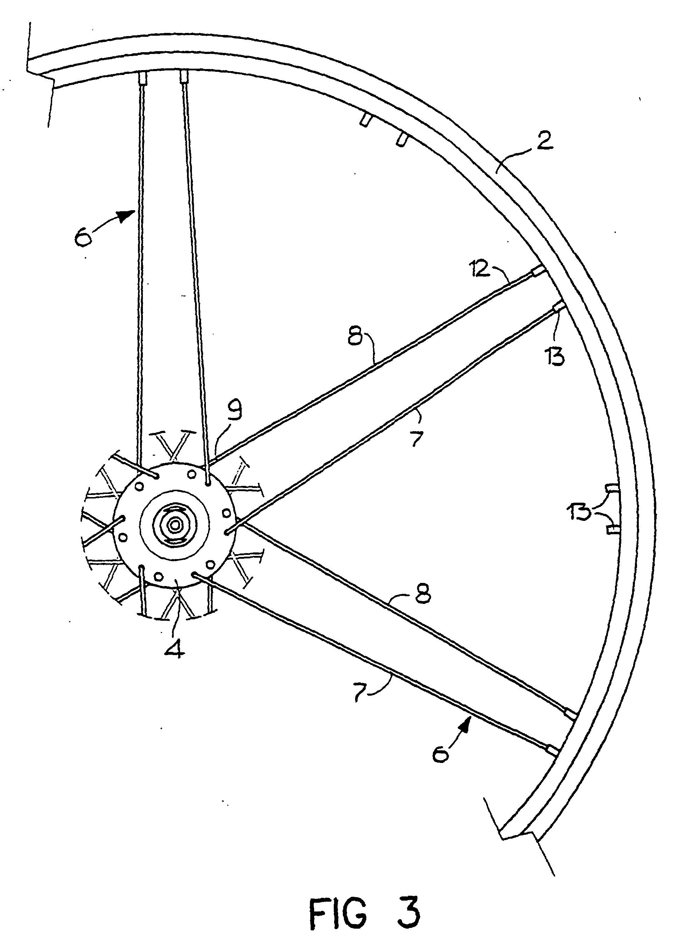

The engagement holes 10 for the wire spokes 7 and 8 are uniformly distributed, on each one of the flanges 4 and 5, substantially in mutually angularly equidistant pairs: the first wire spoke 7 of each one of the elements 6 and the second wire spoke 8 of the directly contiguous element respectively engage in each hole 10 of those pairs. The wire spokes are fixed to the respective nipples 13 so as to cross each other proximate to the flange 4 and 5 without mutual contact (reference should be made, in this regard, to Figures 2 and 3, which illustrate the radial elements 6 of only one of the two pluralities).

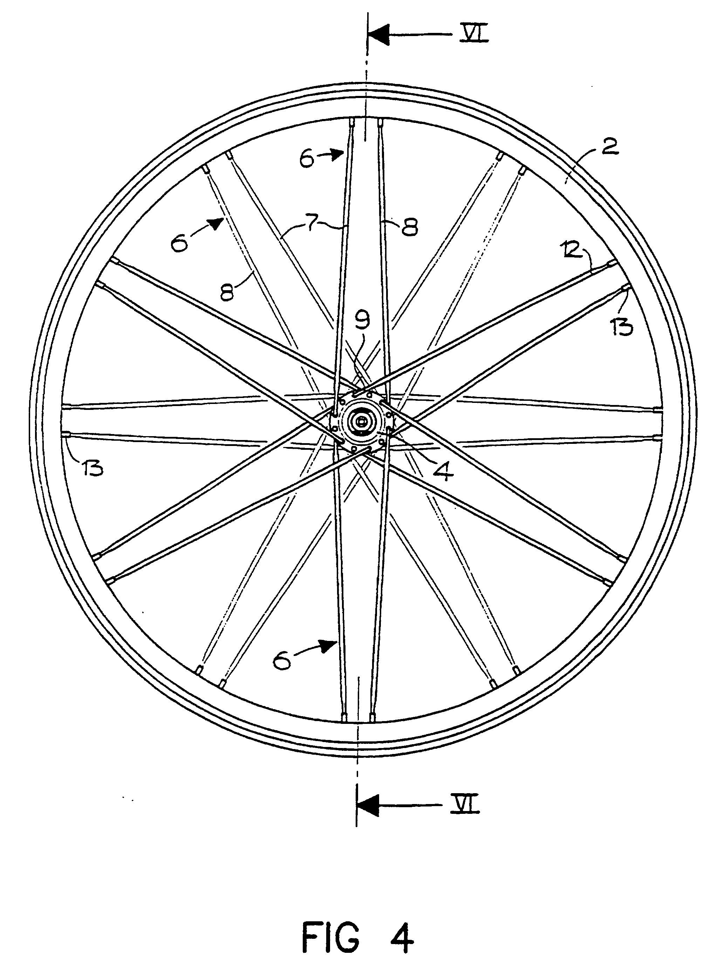

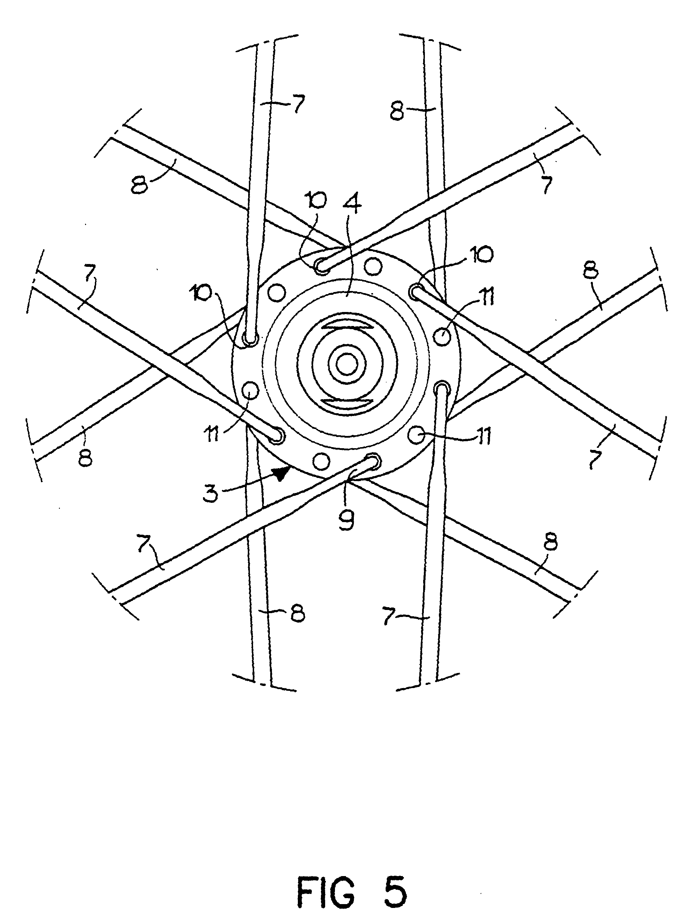

Figures 4, 5 and 6 relate to a further embodiment of the wheel according to the invention. In these figures, elements identical or corresponding to elements of the previous figures are designated by the same reference numerals. In this embodiment, a hub 3 is assembled in which the holes 10 for engaging the wire spokes 7 and 8 are angularly mutually equidistant in each one of the flanges 4 and 5.

In each one of the flanges 4 and 5, the radial elements 6 are engaged in the holes 10 so that the first wire spoke 7 of each odd element 6 (the first, third and fifth elements) crosses, without mutual contact, the second wire spoke 8 of the contiguous odd elements; therefore, for example, the second wire spoke 8 of the first element crosses the first wire spoke 7 of the third element. In the same manner, the first wire spoke 7 of each even element 6 (the second, fourth and sixth elements) crosses, without mutual contact, the second wire spoke 8 of the contiguous even element.

The distribution of the radial elements 6 in the holes 10 described above also allows the crossing, without mutual contact, of the first wire spoke 7 of each radial element 6 and of the second wire spoke 8 of the directly adjacent radial element, as shown in particular in Figure 6.

It is noted that the transverse cross-section of the spokes 7 and 8 can be of any kind, but must maintain the particular mechanical behavior of each element 6 in use, which can be likened to that of a solid spoke of a pressure die-cast wheel.

Moreover, the arrangement of the wire spokes 7 and 8 with crossings without contact in one or more points ensures higher stability, strength and rigidity of the wheel in any operating situation.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Utility Model No. BO2001U000092 from which this application claims priority are incorporated herein by reference.

## Claims

1. A bicycle wheel, particularly for racing and mountain bicycle, comprising a hub (3) that has two flanges (4, 5) connected to a rim (2) by way of wire spokes, **characterized in that** said wire spokes form a first plurality of radial elements (6), which are mutually angularly equidistant by a preset angle and connect said rim (2) to the first flange (4) of said hub (3), and a second plurality of radial elements (6), which are mutually angularly equidistant by said angle, are offset by half of said angle with respect to said first plurality and connect said rim (2) to the second flange (5) of said hub (3), each one of said radial elements (6) being constituted by a first wire spoke (7) and a second wire spoke (8) which are substantially parallel.

2. The wheel according to claim 1, **characterized in that** said first wire spoke (7) and said second wire spoke (8) of each one of said radial elements (6) are engaged on opposite sides with the respective flange (4, 5) and **in that** said first wire spoke (7) of one element is engaged with said flange in a position that is intermediate with respect to the engagement points of said first and second spokes (7, 8) of the contiguous element.

3. The wheel according to claim 1, **characterized in that** said first wire spoke (7) and said second wire spoke (8) of alternated of said radial elements (6) are engaged on a same side of said flange (4, 5), the remaining radial elements (6) being engaged with the opposite side of said flange (4, 5).

4. The wheel according to claim 2, **characterized in that** said first wire spoke (7) and said second wire spoke (8) have a proximal end (9) that is associated with said hub (3) and a distal end (12) that is proximate to said rim (2), said proximal end (9) being folded and inserted in a respective peripheral engagement hole (10) provided in said flange (4, 5), said distal end (12) being screwed into a nipple (13) that is rigidly coupled to said rim (2), said first wire spoke (7) and said second wire spoke (8) forming, at said proximal ends (9), larger portions (11) for abutment respectively against the inner face (4a, 5a) and the outer face (4b, 5b) of said flange.

5. The wheel according to claim 2, **characterized in that** said holes (10) are distributed, on each one of said flanges (4, 5), in angularly equidistant pairs, the first wire spoke (7) of one element (6) and the second wire spoke (8) of the contiguous element being engaged respectively in each one of said pairs of holes, so as to cross without mutual contact.

6. The wheel according to claim 1, **characterized in that** each one of said wire spokes (7, 8) has a circular transverse cross-section at said distal end (12) and said proximal end (9), and a substantially flat cross-section in the central portion.

7. The wheel according to claim 2, **characterized in that** said nipples (13) are distributed, along said rim (2), in pairs that are angularly mutually equidistant for fixing respectively said first wire spoke (7) and said second wire spoke (8) of each one of said radial elements (6).

8. The wheel according to claim 2, **characterized in that** said rim (2) is internally hollow, has a peripheral groove (14) for the application of the tire and is affected by a plurality of radial openings (15) for accommodating said nipples (13).

## Patentansprüche

1. Fahrrad-Rad, insbesondere für Rennräder und Mountain Bikes, umfassend eine Nabe (3), die zwei Flansche (4, 5) hat, die mit einer Felge (2) mit Hilfe von Drahtspeichen verbunden ist, **dadurch gekennzeichnet, dass** die Drahtspeichen eine erste Vielzahl von radialen Elementen (6), die wechselseitig winkelmäßig unter gleichen Abständen in einem vorgegebenen Winkel angeordnet sind und die Felge (2) mit dem ersten Flansch (4) der Nabe (3) verbinden, und eine zweite Vielzahl von radialen Elementen (6) bilden, die wechselseitig winkelmäßig unter gleichen Abständen unter dem genannten Winkel sind und um die Hälfte des genannten Winkels in bezug auf die erste Vielzahl versetzt sind und die Felge (2) mit dem zweiten Flansch (5) der Nabe (3) verbinden, wobei jedes der radialen Elemente (6) aus einer ersten Drahtspeiche (7) und einer zweiten Drahtspeiche (8) gebildet ist, die im wesentlichen parallel sind.

2. Fahrrad nach Anspruch 1, **dadurch gekennzeichnet, dass** die erste Drahtspeiche (7) und die zweite Drahtspeiche (8) von jedem der radialen Elemente (6) auf gegenüberliegenden Seiten mit dem entsprechenden Flansch (4, 5) in Eingriff stehen, und dass die erste Drahtspeiche (7) von einem Element mit dem Flansch in einer Position in Eingriff steht, die in bezug auf die Angriffspunkte der ersten und zweiten Speichen (7, 8) des folgenden Elements dazwischen liegt.

3. Rad nach Anspruch 1, **dadurch gekennzeichnet, dass** die erste Drahtspeiche (7) und die zweite Drahtspeiche (8) von alternerend angeordneten radialen Elementen (7) auf der selben Seite des Flansches (4, 5) angreifen und die restlichen radialen Elemente (6) an der gegenüberliegenden Seite des Flansches (4, 5) angreifen.

4. Rad nach Anspruch 2, **dadurch gekennzeichnet, dass** die erste Drahtspeiche (7) und die zweite Drahtspeiche (8) ein proximales Ende (9) haben, welches der Nabe (3) zugeordnet ist, und ein distales Ende (12) haben, welches bei der Felge (2) liegt, wobei das proximale Ende (9) umgebogen und in ein entsprechendes, am Umfang angeordnetes Befestigungsloch (10), das in dem Flansch (4, 5) vorgesehen ist, eingreift, wobei das distale Ende (12) in einen Nippel (13) eingeschraubt ist, der starr mit der Felge (2) gekoppelt ist, wobei die erste Drahtspeiche (7) und die zweite Drahtspeiche (8) an den proximalen Enden (9) größere Abschnitte (10) bilden, die respektive zum Anlegen an der Innenfläche (4a, 5a) und der Außenfläche (4b, 5b) des Flansches bestimmt sind.

5. Rad nach Anspruch 2, **dadurch gekennzeichnet, dass** die Löcher (10) auf jedem der Flansche (4, 5) in winkelmäßig unter gleichen Abständen liegenden Paaren verteilt sind, wobei die erste Drahtspeiche (7) von einem Element (6) und die zweite Drahtspeiche (8) des folgenden Elements respektive in jedem der Paare der Löcher in Eingriff stehen, so dass sie sich ohne wechselseitigen Kontakt kreuzen.

6. Rad nach Anspruch 1, **dadurch gekennzeichnet, dass** jede der Drahtspeichen (7, 8) einen kreisförmigen, transversalen Querschnitt an dem distalen Ende (12) und dem proximalen Ende (9) und einen im wesentlichen flachen Querschnitt in dem mittleren Bereich hat.

7. Rad nach Anspruch 2, **dadurch gekennzeichnet, dass** die Nippel (13) entlang der Felge (2) in Paaren verteilt sind, die winkelmäßig wechselseitig unter gleichen Abständen liegen, um entsprechende der ersten Drahtspeichen (7) und der zweiten Drahtspeichen (8) von jedem der radialen Elemente (6) zu befestigen.

8. Rad nach Anspruch 2, **dadurch gekennzeichnet, dass** die Felge (2) innenseitig hohl ist, eine Umfangsnut (14) zur Anbringung des Reifens hat und mit einer Vielzahl von radialen Öffnungen (15) versehen ist, um die Nippel (13) aufzunehmen.

## Revendications

1. Roue de bicyclette, spécialement pour la bicyclette de course et de terrain, comprenant un moyeu (3) qui a deux brides (4, 5) connectées à une jante (2) par l'intermédiaire des rayons de fil, **caractérisée en ce que** lesdits rayons de fil forment une première pluralité d'éléments radiaux (6) qui sont mutuellement équidistants du point de vue angulaire par un angle déterminé et qui connecte ladite jante (2) à la première bride (4) dudit moyeu (3), et une seconde pluralité d'éléments radiaux (6) qui sont mutuellement équidistants du point de vue angulaire par ledit angle, qui sont déplacés par la moitié dudit angle relativement à la première pluralité et connecte ladite jante (2) à la seconde bride (5) dudit moyeu (3), chacun desdits éléments radiaux (6) étant constitué par un premier rayon de fil (7) et un second rayon de fil (8) qui sont substantiellement parallèles.

2. Roue de bicyclette selon la revendication 1, **caractérisée en ce que**, ledit premier rayon de fil (7) et ledit second rayon de fil (8) de chacun desdits éléments radiaux (6) sont engagés sur les parties opposées avec les brides respectives (4, 5) et **en ce que** ledit premier rayon de fil (7) d'un élément est engagé avec ladite bride dans une position qui est intermédiaire relativement aux points d'engagement desdits, premier et second rayons (7, 8) de l'élément adjacent.

3. Roue de bicyclette selon la revendication 1, **caractérisée en ce que**, ledit premier rayon de fil (7) et ledit second rayon de fil (8) desdits éléments radiaux alternatifs (6) sont engagés sur la même partie de ladite bride (4, 5), les éléments radiaux restés (6) étant engagés avec la partie opposée de ladite bride (4, 5).

4. Roue de bicyclette selon la revendication 2, **caractérisée en ce que**, ledit premier rayon de fil (7) et ledit second rayon de fil (8) ont une extrémité proximale (9) qui est associée avec ledit moyeu (3) et une extrémité distale (12) qui est près de ladite jante (2), ladite extrémité proximale (9) étant contenue et insérée dans un trou d'engagement périphérique respectif (10) prévu dans ladite bride (4, 5), ladite extrémité distale (12) étant vissée dans un raccord (13) qui est couplé rigidement à ladite jante (2), ledit premier rayon de fil (7) et ledit second rayon de fil (8) formant auxdites extrémités proximales (9) des portions plus larges (11) pour l'appui respectivement sur la face intérieure (4a, 5a) et la face extérieure (4b, 5b) de ladite bride.

5. Roue de bicyclette selon la revendication 2, **caractérisée en ce que**, lesdits trous (10) sont distribués sur chacune desdites brides (4, 5) en paires équidistantes de manière angulaire, le premier rayon de fil (7) d'un élément (6) et le second rayon de fil (8) d'un élément adjacent étant engagés respectivement en chacune desdites paires de trous de sorte qu'ils croisent sans contact mutuel.

6. Roue de bicyclette selon la revendication 1, **caractérisée en ce que**, chacun desdits rayons de fil (7, 8) a une section transversale circulaire à ladite extrémité distale (12) et ladite extrémité proximale (9) et une section transversale substantiellement plate dans la portion centrale.

7. Roue de bicyclette selon la revendication 2, **caractérisée en ce que**, lesdits raccords (13) sont distribués au long de ladite jante (2) en paires qui sont mutuellement équidistants du point de vue angulaire pour la fixation respectivement dudit premier rayon de fil (7) et dudit second rayon de fil (8) de chacun desdits éléments radiaux (6).

8. Roue de bicyclette selon la revendication 2, **caractérisée en ce que**, ladite jante (2) est concave à l'intérieur, a une cannelure périphérique (14) pour l'application du pneumatique et est affectée par une pluralité d'ouvertures radiales (15) pour l'accommodation desdits raccords (13).
